# NEUE EUROPÄISCHE PATENTSCHRIFT

(11) **EP 1 747 385 B2**
(45) Veröffentlichungstag und Bekanntmachung des Hinweises auf die Entscheidung über den Einspruch: **02.10.2013**
(45) Hinweis auf die Patenterteilung: 20.08.2008
(21) Anmeldenummer: 05745523.0
(22) Anmeldetag: 11.05.2005
(51) Int. Cl.: F16D 65/12

(54) **BREMSSCHEIBEN-NABENANORDNUNG MIT VERSCHIEBLICHER BREMSSCHEIBE**
BRAKE DISK/HUB ASSEMBLY WITH DISPLACEABLE BRAKE DISKS
ENSEMBLE DISQUE DE FREIN-MOYEU AVEC DISQUE DE FREIN MOBILE

(30) Priorität: 11.05.2004 DE 102004023748
(43) Veröffentlichungstag der Anmeldung: 31.01.2007
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE)
(74) Vertreter: Specht, Peter
(86) Internationale Anmeldenummer: PCT/EP2005/005074
(87) Internationale Veröffentlichungsnummer: WO 2005/111456

(56) Entgegenhaltungen:
- EP-A- 0 366 920
- EP-A1- 0 366 920
- WO-A1-01//98681
- DE-A1- 10 049 615
- US-A- 3 469 658
- US-A- 3 469 658

## Beschreibung

Die Erfindung betrifft eine Bremsscheiben-Nabenanordnung nach dem Oberbegriff des Anspruchs 1.

Scheibenbremsen lassen sich nach dem gewählten Prinzip der Krafteinleitung in zwei Grundbauarten einteilen: Krafterzeugung und Verschleißnachstellung beiderseits der Bremsscheibe: z.B. hydraulische Festsattelscheibenbremse mit axial fixierter Bremsscheibe und Krafterzeugung beidseits der Bremsscheibe, sowie Krafterzeugung und Verschleißnachstellung auf einer Seite der Bremsscheibe und Übertragung der Betätigungskraft auf die abgewandte Seite nach dem Reaktionskraftprinzip: z.B. Schiebesattelscheibenbremse, Schwenksattelscheibenbremse, Festsattelscheibenbremse mit verschiebbarer Bremsscheibe.

Druckluftbetätigte Scheibenbremsen für schwere Nutzfahrzeuge mit Felgendurchmessern von 15Zoll und mehr nutzen das Reaktionskraftprinzip, da aufgrund der beengten Einbauverhältnisse am Fahrzeugrad die Anordnung eines Druckluft- Betätigungszylinders nur auf der zur Fahrzeuginnenseite offenen Seite des Fahrzeugrades möglich ist. Derartige Konstruktionen zeigen z.B. die DE 36 10 569 A1, die DE 37 16 202 A1, die EP 0 531 321 A1 (siehe hier insbesondere die Konstruktion der Nachsteller nach Art von Drehantrieben) und die EP 0 688 404 A1.

Schiebesattel oder Schwenksattel-Scheibenbremsen benötigen ein achsfestes Bauteil - i.allg. Bremsträger genannt - welches die Bremsschuhe/Bremsbeläge hält bzw. führt und bei Bremsbetätigung deren Umfangskräfte aufnimmt sowie den koaxial zur Fahrzeugachse verschiebbar gelagerten Bremssattel trägt. Die Relativbewegung, welche der Bremssattel gegen das achsfeste Bauteil ausführt, läßt sich in den Arbeitshub und der Bremssattel gegen das achsfeste Bauteil ausführt, läßt sich in den Arbeitshub und den Verschleißhub unterteilen. Der Arbeitshub wird bei jeder Bremsbetätigung ausgeführt, um das Lüftspiel der Bremse zu überwinden und die bei der Kraftaufbringung entstehenden Elastizitäten von Bremsbelägen und Bremssattel auszugleichen. Er beträgt - je nach Höhe der Betätigungskraft und der Größe des Lüftspiels - üblicherweise weniger als 4 mm.

Der Verschleißhub ist dagegen der Verschleißnachstellweg, den der Sattel über eine große Anzahl von Bremsbetätigungen ausführt, um den Verschleiß an der Reaktionsseite der Bremse auszugleichen. Der Verschleißhub setzt sich aus dem Verschleiß des außen liegenden Bremsbelages und der außen liegenden Bremsscheibenreibfläche zusammen und beträgt üblicherweise bis zu 25mm.

Bei der Bremsenbauart mit einem Festsattel und einer verschiebbaren Bremsscheibe werden dagegen Arbeitshub und Verschleißhub durch Verschieben der Bremsscheibe erzeugt. Eine Festsattelbremse mit elektromechanischen Nachstellvorrichtungen auf beiden Seiten einer Bremsscheibe ist z.B. aus der EP-B-1230 491 bekannt.

Bei der Bauart mit verschiebbarer Bremsscheibe besteht das Problem, die Bremsscheibe auf dem Führungsbereich der Nabe über die ganze Lebensdauer leicht schiebbar zu halten. Eine wirkungsvolle Abdichtung ist aufgrund der beengten Einbauverhältnisse und der harten Umgebungsbeanspruchung kaum realisierbar.

Eine gattungsgemäße Bremsscheiben-Nabenanordnung zeigt die US-A-3,469,658. Eine weitere derartige Bremsscheiben-Nabenanordnung zeigt die EP-A-0 366 920.

Die Erfindung hat vor diesem Hintergrund die Aufgabe, eine verschiebliche Bremsscheibe zu schaffen, die sich insbesondere zum Einsatz bei pneumatisch oder elektromechanisch betätigten Scheibenbremse mit Festsattel eignet und gut gegen ein Festsetzen infolge von Korrosion oder dgl. geschützt ist.

Diese Aufgabe löst die Erfindung durch den Gegenstand des Anspruches 1.

Die Schiebehülse sowie die Nabe und/oder weitere Elemente können gut korrosionsgeschützt ausgebildet werden, so dass ein korrosionsbedingtes Festsetzen der Bremsscheibe auf einfache konstruktive Weise vermieden werden kann.

Die Bremsscheibe werst eine Innenverzahnung und die Schiebehülse eine korrespondierende Außenverzahnung und/oder Taschen zur Aufnahme der Innenverzahnung auf, um eine gute Drehmomentübertragung auch in diesem Bereich zu gewährleisten. Auf diese Weise wird auch eine geringe thermische Belastung der Radlagerung erreicht, da die Bremsscheibe nicht direkt sondern nur über die Verzahnung und die Schiebehülse mit der Nabe verbunden ist. Die axiale Fixierung der Bremsscheibe kann beispielsweise mittels relativ kleiner Schrauben oder dgl. an der Schiebehülse erfolgen. Die Lösung mittels Taschen für die Innenverzahnung ist prinzipiell auch direkt an einer Nabe realisierbar und stellt eine eigene Erfindung dar, die auch ohne Schiebehülse zur Befestigung einer Bremsscheibe nutzbar ist, die aber auch vorteilhaft zur Weiterbildung der Schiebehülse eingesetzt wird. Übermäßige Belastungen, die zur Rissbildung führen könnte, lassen sich derart weitgehend vermeiden.

Das Zahnprofil kann derart ausgestaltet werden, dass der Eintritt von Kühlluft in die Bremsscheibe nicht verhindert wird, wenn diese mehrere Reibringe aufweist.

Es sind am Innenumfang der Schiebehülse und dem Außenumfang der Nabe jeweils korrespondierende - insbesondere halbzylindrische - Ausnehmungen verteilt, in welche Zwischenelemente zur Drehmomentübertragung zwischen der Nabe und der Schiebehülse verteilt sind. Diese Elemente realisieren auf konstruktiv einfache Weise eine gute Führung und eine sichere Drehmomentübertragung zwischen der Schiebehülse und der Nabe.

Besonders bevorzugt verhindern ergänzend wenigstens ein Abstreif- und Säuberungselement und/oder ein Scheuerring und/oder ein Dichtbalg ein Eindringen von Schmutz in die Schiebehülse.

Weitere vorteilhafte Ausgestaltungen sind den übrigen Unteransprüchen zu entnehmen.

Nachfolgend werden Ausführungsbeispiele der Erfindung unter Bezug auf die Zeichnung näher erläutert. Es zeigt:
- Fig. 1: einen Schnitt durch einen Teil einer Achsnabe mit dem daran angrenzenden Bereich einer ersten Bremsscheibe mit Schiebehülse;
- Fig. 2: einen Schnitt durch einen Teil einer Achsnabe mit dem daran angrenzenden Bereich einer Schiebehülse mit einer alternativen Ausführungsform der Zwischenelemente;

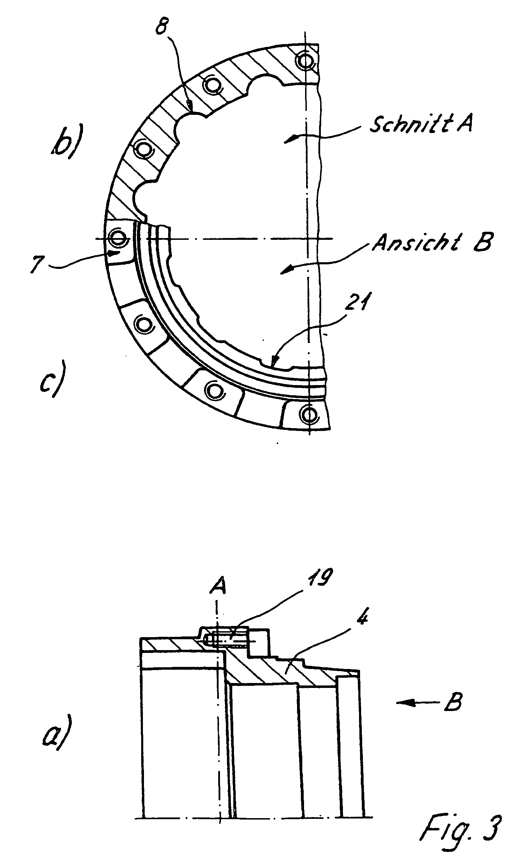

- Fig. 3a-c: verschiedene Schnittansichten eines Teils einer Schiebehülse; und

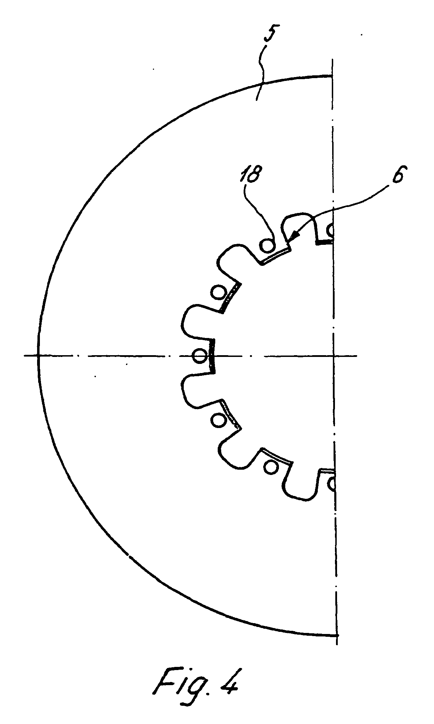

- Fig. 4: eine Teilansicht einer Bremsscheibe mit einer Innenverzahnung.

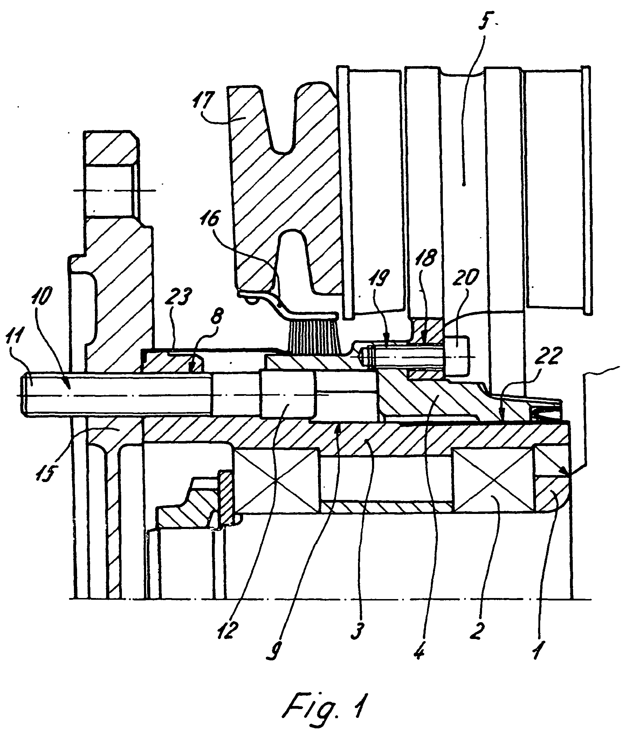

Fig. 1 zeigt eine relativ zu einer Radachse 1 mittels zwischengeschalteter Lager 2 drehbar gelagerte Nabe 3, auf der eine am Außenumfang gestuft entsprechend der Einbauverhältnisse ausgebildete Schiebehülse 4 axial verschieblich geführt ist, auf der wiederum eine Bremsscheibe 5 axial relativ zur Schiebehülse 4 unverschieblich angeordnet ist, so dass die Schiebehülse 4 und die Bremsscheibe 5 gemeinsam als Einheit auf der Nabe 3 verschiebbar sind, und zwar vorzugsweise über den kombinierten Weg von Arbeits- und maximalem Verschleißhub..

Die Bremsscheibe 5 kann eine Innenverzahnung 6 und die Hülse eine korrespondierende Außenverzahnung bzw. entsprechende Taschen 7 zur Aufnahme der Innenverzahnung 6 aufweisen und wird in an sich beliebiger Art axial auf der Schiebehülse 4 fixiert, z.B. verschraubt, wobei hier die Schiebehülse 4 und die Bremsscheibe 5 korrespondierende Bohrungen 18, 19 aufweisen, in die jeweils ein Schraubbolzen 20 eingeschraubt ist. Alternative Befestigungsarten der zur Drehmomentübertragung innenverzahnten Scheibe sind denkbar.

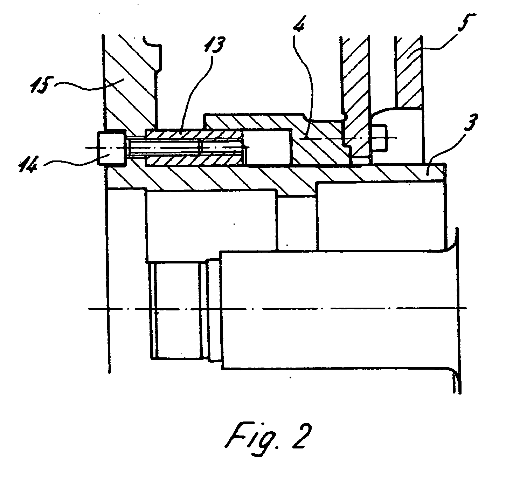

Die Schiebehülse 4 ist axial möglichst lang bemessen bzw. nutzt den maximal zur Verfügung stehenden Bauraum aus, um eine möglichst günstige Führungslänge zu erreichen und damit eine möglichst günstige Abstützung zu erreichen. Einseitig bietet der Radträgerflansch 15 eine Begrenzung des Verschiebeweges (man vergleiche insofern auch Fig. 1 und 2).

Zur Drehmomentübertragung zwischen dem Innenumfang der Schiebehülse 4 und dem Außenumfang der Nabe 3 ist eine entsprechende ineinandergreifende konturgebung denkbar - nicht dargestellt - oder aber es werden - und diese Varianten werden besonders bevorzugt - in der Schiebehülse 4 am Innenumfang und in der Nabe 3 am Außenumfang korrespondierende Ausnehmungen 8, 9 verteilt, in welche Zwischenelemente 10 wie Bolzen 11 mit vorzugsweise zylindrischem Kopf 12 (Fig. 1) oder vorzugsweise zylindrische Hülsen 13 eingesetzt werden, die z.B. mittels separater oder angeformter Schraubbolzen 14 an einem Radträgerflansch 15 verschraubt sind. Die Ausnehmungen 8,9 erstrecken sich nur über einen Teil der axialen Länge der Schiebehülsen 4.

Eine hermetische Abdichtung zwischen der Schiebehülse 4 und der Nabe 3 ist aufgrund der korrosionsbeständigen Ausbildung nicht erforderlich. Das Eindringen von grobem Schmutz kann durch geringe Spaltmaße und Abdichtungsmaßnahmen zwischen der Schiebehülse 4 und der Nabe 3 weitgehend verhindert werden.

Die innere, dem Fahrzeug zugewandte Führungsfläche der Schiebehülse 4 ist als unterbrochene Zylinderfläche ausgebildet, so dass Abrieb und Schmutz sich ggf. in Taschen 21 ablagern kann.

Die Gegenlauffläche am Außenumfang der Nabe 3 kann durch einen aufgepressten rostfreien Blechring 22 (zyl. Blechhülse), ggf. mit Edelstahlverstärkung oder in sonstiger Ausführung gegen Korrosion geschützt werden.

Zur Vermeidung von Schmutzablagerungen sowie zur Vermeidung von Krustenbildungen an den freistehenden, nicht abgedeckten Dichtflächen dienen Abstreif- und Säuberungselemente 16 , welche am Festsattel 17 befestigbar sind und die aufgrund der Relativbewegung zur drehenden Nabe 3 automatisch in Aktion treten.

Dieser Effekt kann auch durch eine Art Scheuerring, der um die Dichtflächen gelegt wird, realisiert werden. In diesem Zusammenhang wird auch auf den Blechring 23 am Außenumfang der Schiebehülse 4, der am Radträgerflansch 15 verpresst ist, verwiesen.

Grundsätzlich besteht auch die Möglichkeit dazu, die Schiebehülse 4 z.B. durch Dichtinsbesondere Faltenbälge, insbesondere aus Metall, abzudichten.

Besonders vorteilhaft ist auch die Anordnung der Bremsscheibe 5 mittels einer Verzahnung auf der Schiebehülse.

Der Verschiebeweg kann dem gesamten Arbeitshub und Verschleißmaß entsprechen (bei einer Ausgestaltung mit Nachstellvorrichtungen auf nur einer Seite der Bremsscheibe) oder aber auch nur dem Arbeitshub (bei einer Ausgestaltung mit Nachstellvorrichtungen auf beiden Seiten der Bremsscheibe).

### Bezugszeichen

- Radachse: 1
- Lager: 2
- Nabe: 3
- Schiebehülse: 4
- Bremsscheibe: 5
- Innenverzahnung: 6
- Außenverzahnung: 7
- Ausnehmungen: 8,9
- Zwischenelemente: 10
- Bolzen: 11
- Kopf: 12
- Hülsen: 13
- Schraubbolzen: 14
- Radflansch: 15
- Säuberungselemente: 16
- Festsattel: 17
- Bohrungen: 18, 19
- Schraubbolzen: 20
- Taschen: 21
- Blechring: 22, 23

## Patentansprüche

1. Bremsscheiben-Nabenanordnung mit
a) einer Nabe (3) und
b) einer relativ zur Nabe (3) axial verschieblichen Bremsscheibe (5),
c) wobei auf der Nabe (3) eine Schiebehülse (4) axial verschieblich geführt ist, auf der die Bremsscheibe (5) relativ zur Schiebehülse (4) unverschieblich angeordnet ist und wobei
d) die Schiebehülse relativ zur Nabe (3) unverdrehbar gelagert ist.
**dadurch gekennzeichnet dass**
die Bremsscheibe (5) eine Innenverzahnung (6) und die Schiebehülse eine korrespondierende Außenverzahnung und/oder Taschen (7) zur Aufnahme der Innenverzahnung (6) aufweist and am Innenumfang der Schiebehülse (4) und dem Außenumfang der Nabe (3) jeweils korrespondierende Ausnehmungen (8, 9) verteilt sind, in welchen Zwischenelemente (10) zur Drehmomentübertragung zwischen der Nabe (3) und der Schiebehülse (4) verteilt sind und dass sich die Zwischenelemente (10) und die korrespondierenden Ausnehmungen (8, 9) nur über einen Teil der axialen Länge der Schiebehülse (4) erstrecken.

2. Bremsscheiben-Nabenanordnung nach Anspruch 1, **dadurch gekennzeichnet dass** die axiale Fixierung der Bremsscheibe mittels Schrauben erfolgt.

3. Bremsscheiben-Nabenanordnung nach einem der vorstehenden Ansprüche 1 oder 2, **dadurch gekennzeichnet, dass** die Zwischenelemente (10) an einem Radträgerflansch befestigt und relativ zur Nabe (3) unverschiebbar angeordnet sind.

4. Bremsscheiben-Nabenanordnung nach einem der vorstehenden Ansprüche 1 bis 3, **dadurch gekennzeichnet, dass** die Zwischenelemente (10) als Schraubbolzen (11) mit einem zylindrischen Kopf (12) und/oder Endabschnitt ausgebildet sind.

5. Bremsscheiben-Nabenanordnung nach einem der vorstehenden Ansprüche 1 bis 5, **dadurch gekennzeichnet, dass** die Zwischenelemente (10) Hülsen (13) aufweisen.

6. Bremsscheiben-Nabenanordnung nach einem der vorstehenden Ansprüche 1 bis 5, **dadurch gekennzeichnet, dass** die Nabe (3) und oder die Schiebehülse (4) und/oder die Zwischenelemente (10) im Bereich ihrer verschieblich aneinander gleitenden Führungsflächen korrosionsgeschützt ausgebildet sind.

7. Bremsscheiben-Nabenanordnung nach einem der vorstehenden Ansprüche, **dadurch gekennzeichnet, dass** wenigstens ein Abstreif- und Säuberungselement (16) und/oder ein Scheuerring und/oder ein Dichtbalg ein Eindringen von Schmutz in die Schiebehülse (4) verhindern.

## Claims

1. Brake disc/hub assembly comprising
a) a hub (3) and
b) a brake disc (5) which is axially displaceable relative to the hub (3),
c) wherein a sliding sleeve (4) is guided for axial displacement on the hub (3), whereon the brake disc (5) is non-displaceably located relative to the sliding sleeve (4), and wherein
d) the sliding sleeve (4) is non-rotatably mounted relative to the hub (3)
**characterised in that**
the brake disc (5) has an internal toothing (6) and the sliding sleeve has a corresponding external toothing and/or pockets (7) for the accommodation of the internal toothing (6), and **in that** corresponding recesses (8, 9) are distributed over the internal circumference of the sliding sleeve (4) and the external circumference of the hub (3), wherein intermediate elements (10) are distributed for the transmission of torque between the hub (3) and the sliding sleeve (4), and **in that** the intermediate elements (10) and the corresponding recesses (8, 9) extend only along part of the axial length of the sliding sleeve (4).

2. Brake disc/hub assembly according to claim 1, **characterised in that** the brake disk is axially located by means of bolts.

3. Brake disc/hub assembly according to claim 1 or 4, **characterised in that** the intermediate elements (10) are secured to a hub carrier flange and are non-displaceable relative to the hub (3).

4. Brake disc/hub assembly according to any of claims 1 to 3, **characterised in that** the intermediate elements (10) are designed as studs (11) with a cylindrical head (12) and/or end section.

5. Brake disc/hub assembly according to any of claims 1 to 4, **characterised in that** the intermediate elements (10) are provided with sleeves (13).

6. Brake disc/hub assembly according to any of claims 1 to 5, **characterised in that** the hub (3) and/or the sliding sleeve (4) and/or the intermediate elements (10) are/is protected against corrosion in the region of their displaceably sliding guide surfaces.

7. Brake disc/hub assembly according to any of the preceding claims, **characterised in that** at least one wiping and cleaning element (16) and/or a rubbing ring and/or a sealing bellows prevent the entry of contaminants into the sliding sleeve (4).

## Revendications

1. Module de disque de frein/moyeu à un disque de frein déplaçable, comprenant
(a) un moyeu (3) et
(b) un disque de frein (5) axialement déplaçable relativement audit moyeu (3),
(c) dans lequel un manchon coulissant (4) est guidé de façon à se déplacer de manière coulissant axialement audit moyeu (3), audit disque de frein (5) étant disposé audit manchon d'une manière à empêcher un déplacement coulissant relatif audit manchon (4), et dans lequel
(d) ledit manchon coulissant est logé de façon à empêcher une rotation relative audit moyeu (3),
**caractérisé en ce**
**que** ledit disque de frein (5) est muni d'une denture (6) intérieure et ledit manchon coulissant est muni d'une denture extérieure correspondante et/ou des poches (7) à recevoir ladite denture intérieure (6), et des évidements correspondants respectifs (8, 9) sont distribués le long de la périphérie intérieure dudit manchon coulissant (4) et le long de la périphérie extérieure dudit moyeu (3), dans lesquels évidements sont distribués des éléments intermédiaires (10) de transmission d'un moment de couple entre ledit moyeu (3) et ledit manchon coulissant (4), et en ce que lesdits éléments intermédiaires (10) et lesdits évidements correspondants (8, 9) ne s'étendent que sur une partie de la longueur axiale dudit manchon coulissant (4).

2. Module de disque de frein/moyeu selon la revendication 1, **caractérisé en ce que** la fixation axiale dudit disque de frein est réalisé moyennant des vis.

3. Module de disque de frein/moyeu selon une quelconque des revendications précédentes 1 ou 2, **caractérisé en ce que** lesdits éléments intermédiaires (10) sont fixés à une flasque porte-roue et sont disposés d'une telle manière, qu'un déplacement coulissant relatif audit moyeu (3) soit empêché.

4. Module de disque de frein/moyeu selon une quelconque des revendications précédentes 1 à 3, **caractérisé en ce que** lesdits éléments intermédiaires (10) sont configurés sous forme de boulons (11) ayant une tête cylindrique (12) et/un segment terminal cylindrique.

5. Module de disque de frein/moyeu selon une quelconque des revendications précédentes 1 à 5, **caractérisé en ce que** lesdits éléments intermédiaires (10) sont munis des manchons (13).

6. Module de disque de frein/moyeu selon une quelconque des revendications précédentes 1 à 5, **caractérisé en ce que** ledit moyeu (3) et/ou ledit manchon coulissant (4) et/ou lesdits éléments intermédiaires (10) sont configurés d'une telle façon, qu'ils soient protégés contre la corrosion dans la zone de leurs surfaces de guidage, qui coulissent l'une à l'autre en se déplaçant.

7. Module de disque de frein/moyeu selon une quelconque des revendications précédentes, **caractérisé en ce qu'**au moins un élément racleur et nettoyeur (16) et/ou un anneau abrasif et/ou un soufflet d'étanchéité empêchent la pénétration des salissures dans ledit manchon coulissant (4).
